# EUROPEAN PATENT SPECIFICATION

(11) **EP 4 459 766 B1**
(45) Date of publication and mention of the grant of the patent: **22.07.2026**
(21) Application number: 23898226.8
(22) Date of filing: 24.11.2023
(51) Int. Cl.: H01M 50/264, H01M 50/291, H01M 50/502, H01M 50/204, H01M 50/289, H01M 50/209, H01M 50/211, H01M 50/262, H01M 50/271, H01M 50/507

(54) **BATTERY PACK**
BATTERIEPACK
BLOC-BATTERIE

(30) Priority: 02.12.2022 KR 20220167142; 17.03.2023 KR 20230035421
(43) Date of publication of application: 06.11.2024
(73) Proprietor: LG Energy Solution, Ltd., Seoul 07335 (KR)
(72) Inventor: HUR, Nam Hoon, Daejeon 34122 (KR); SHIN, Ju Hwan, Daejeon 34122 (KR); JEON, Jong Pil, Daejeon 34122 (KR)
(74) Representative: Plasseraud IP
(86) International application number: PCT/KR2023/019152
(87) International publication number: WO 2024/117695

(56) References cited:
- CN-U- 215 299 382
- CN-U- 215 299 382
- CN-U- 215 731 965
- CN-U- 215 731 965
- JP-A- 2021 041 783
- JP-A- 2021 041 783
- KR-A- 20180 058 801
- KR-A- 20220 014 027
- KR-A- 20220 014 027
- US-B2- 10 170 739
- US-B2- 9 748 538

## Description

### [Technical Field]

The present invention relates to a battery pack and, more particularly, to a battery pack having a structure that allows cell laminates or battery modules to be installed tightly to a separation wall without interference from welding beads, while regulating the mounting position thereof. In particular, the present invention provides a battery pack suitable for a Cell to Pack (CTP) structure in which the cell laminates are installed directly into the battery pack.

### [Background Art]

Conventional battery packs are manufactured with a plurality of battery modules having a plurality of cell laminates accommodated in a module housing in a pack case.

However, such conventional battery packs require two applications of thermal resin between the cell laminate and the module housing and between the module housing and the pack case, which increases manufacturing costs while reducing cooling performance. In addition, the additional components required for mounting the module components and pack case to compose the battery module increased component costs. In addition, when welding the separation wall dividing the battery modules to the pack case, welding beads in the separation wall prevented the module housing from being installed tightly against the separation wall, resulting in poor space utilization in the pack case and reduced energy density of the battery pack.

In a simplified structure where the module housing is removed and the cell laminate is mounted directly on the pack case in order to realize a battery pack with a cell-to-pack structure, the problem of interference of the cell laminate by the welding beads of the separation wall is still present. In addition, even though the cell laminate is mounted directly on the pack case, it is necessary to regulate the initial installation position of the cell laminate so that it is not disturbed during installation and long-term use of the battery pack, which is difficult in the simplified cell-to-pack structure where the module housing is removed.

In addition, when installing cell laminates between separation walls without module housings, it is very productive to use a loading jig that grabs a plurality of cell laminates at once and places them into the separation wall, as interference between the loading jig and the separation wall, which is gripped deep into the cell laminate to stably transport a group of high weight cell laminates, makes it difficult to install a plurality of cell laminates into the pack case at once.

Therefore, it is necessary to develop a technology that can simplify the structure of the battery pack, improve space utilization and energy density by excluding interference from welding beads, regulate the position of the cell laminate even in a cell-to-pack structure without a module housing, and effectively install a plurality of cell laminates into the pack case. Document KR 10-2022 0014027 A discusses a battery pack capable of increasing energy density by increasing the number of battery cells accommodated in a predetermined space. Document KR 10-2018-0058801 A discusses complimentary structures formed on the battery pack housing and battery module that locate the battery module relative to the battery pack housing, and permit quick connection and disconnection of the battery module from the battery pack housing. Document US 9 748 538 B2 relates to a motor vehicle battery. Document CN 215731965 U relates to the technical field of power batteries, in particular to a battery pack case.

### [Disclosure]

### [Technical Problem]

The present invention is related to a battery pack according to claim 1. It is provided a pack case in which a welding operation for coupling a cross beam to a base plate can be easily performed, in which a uniform surface pressure can be applied to a plurality of cell laminates, and in which a loading jig handling the plurality of cell laminates integrally can perform the operation stably without interference from the cross beam.

Further, the present invention has another object to provide a pack case that can solve the problem of interference of the cell laminate by the welding bead that inevitably occurs when welding the cross beam to the base plate.

In addition, it is another object of the present invention to provide a pack case with a simplified composition, e.g., a pack case that allows regulating the position of the cell laminate even in a cell-to-pack structure without a separate module housing.

However, the technical problem to be solved by the present invention is not limited to the above-described problem, and other problems not mentioned can be clearly understood by a person skilled in the art from the description of the invention described below.

### [Technical Solution]

The present invention relates to a battery pack comprising a pack case comprising a base plate, a side plate coupled to the base plate along a periphery of the base plate to form a receiving space therein, a lower cross beam coupled to the base plate to transversely divide the receiving space inside the base plate, and an upper cross beam coupled to the lower cross beam, wherein the lower cross beam and the upper cross beam are each provided with fastening grooves to regulate the installation position of a cell laminate.

The pack case of the present invention, wherein the upper cross beam is upwardly coupled with respect to the lower cross beam to form a single cross beam.

In one embodiment, the lower cross beam may comprise a first uneven structure having repeated concave portion and projecting portion in the direction of coupling of the upper cross beam, and the upper cross beam may comprise a second uneven structure having a shape complementary to the first uneven structure.

The lower cross beam may be welded to the base plate, and the upper cross beam may be coupled to the lower cross beam by bolts.

In one embodiment, the lower cross beam and the upper cross beam are made of different materials, wherein the upper cross beam may be made of a lighter material than the lower cross beam.

Further, the lower cross beam may comprise at least one concave welding groove at a boundary with the base plate.

For example, the welding grooves may be provided on both sides of the lower cross beam.

Each of the welding grooves provided on both sides of the lower cross beam may be dispersedly arranged so as to be at least partially non-overlapping along a direction facing each other.

Further, the lower cross beam may be welded to the base plate via the welding grooves, and the welding bead formed in the welding grooves may not project outside of the lower cross beam.

**In** one embodiment of the present invention, the fastening groove may be formed in the form of an open groove with the coupling surface of the lower cross beam and the upper cross beam as an opening.

**In** another embodiment of the present invention, the fastening groove may be formed in the form of a hole separated from each other by a boundary between the coupling surfaces of the lower cross beam and the upper cross beam, and may further comprise an induction groove extending from the coupling surfaces of the lower cross beam and the upper cross beam to the hole.

The present invention provides a battery pact including the pack case having the above configuration, and a plurality of cell laminates mounted in a divided receiving space of the pack case.

The plurality of cell laminates comprise a busbar frame assembly coupling to the cell laminates at both ends from which leads are projected, the busbar frame assembly comprising a protruding structure that is fastened to respective fastening grooves of the lower cross beam and the upper cross beam.

**In** one embodiment, the fastening grooves may be formed in the form of an opening groove in a coupling surface of the lower cross beam and the upper cross beam, and correspondingly, the protruding structure may be arranged as a fin structure corresponding to the form in which the opening grooves of the lower and upper cross beams are connected into one.

**In** another embodiment, the fastening groove may be formed in the form of holes separated from each other by a boundary between the coupling surfaces of the lower cross beam and the upper cross beam, and correspondingly, the protruding structure may be arranged as a snap-fit joint comprising a cantilever lug fastened to the holes of the lower and upper cross beams.

Further, the fastening groove may comprise an induction groove extending from a coupling surface of the lower cross beam and the upper cross beam to the holes, and the protruding structure may be fastened to the holes by the cantilever lugs gliding over the surface of the induction groove.

The protruding structures may be disposed on either side of the busbar frame assembly, facing respective fastening grooves of the lower cross beam and the upper cross beam.

Further, the busbar frame assembly may include an insulating cover that is coupled to a front surface thereof.

**In** addition, the contact surfaces of the plurality of cell laminates and the base plate may be interposed with a thermal resin.

### [Advantageous Effects]

As described above, the pack case of the present invention comprises a double-layered structure of a lower cross beam coupled to a base plate by a single cross beam and an upper cross beam coupled upwardly to the lower cross beam. The bi-layer configuration of the cross beam facilitates welding of the lower cross beam to the base plate by improving the accessibility of the welding tool tip, and improves the operation of the loading jig by enabling the plurality of cell laminates to be placed in the pack case before the upper cross beam is assembled.

Further, the bilayer configuration of the cross beam allows the upper cross beam, which does not involve welding to the base plate, to be constructed of a lightweight different material, such as engineering plastics, thereby contributing to the lightweight of the battery pack.

In addition, the pack case of the present invention is provided with fastening grooves for regulating the installation position of the cell laminate in each of the lower and upper cross beams, which enables regulating the position of the cell laminate even in pack case structures with simplified configuration, e.g. in cell-to-pack structures without separate module housings, thereby improving the productivity and safety of the battery pack.

Furthermore, according to one embodiment of the present invention, the lower cross beam is provided with a first uneven structure, which enables the gripper of the loading jig to grip the cell laminate firmly without interfering with the lower cross beam and to place the cell laminate on the base plate in a shockless and stable manner.

However, the technical effects that can be obtained through the present invention is not limited to the above-described effects, and other effects not mentioned can be clearly understood by a person skilled in the art from the description of the invention described below.

### [Brief Description of the Drawings]

Because the following drawings attached to the present specification illustrate exemplary embodiments of the present invention and serve to facilitate understanding of the technical idea of the present invention together with the detailed description of the invention described below, the present invention should not be limitedly interpreted on the basis of the drawings.
FIG. 1 is a perspective view of a pack case according to one embodiment of the present invention.
FIG. 2 is a perspective view of the pack case of FIG. 1 with the upper cross beam detached.
FIG. 3 is a drawing illustrating the coupling structure of the lower and upper cross beams.
FIG. 4 is a cross-sectional view with an incision along the "A-A" line in FIG. 3.
FIG. 5 is a perspective view illustrating the welding structure of the lower cross beam to the base plate.
FIG. 6 is a plan view showing the welding points of the lower cross beam to the base plate.
FIG. 7 is a perspective view illustrating one embodiment of a cross beam having a fastening groove.
FIG. 8 is a diagram illustrating another embodiment of a cross beam having a fastening groove.
FIG. 9 is a drawing illustrating a configuration in which a plurality of cell laminates are mounted to a pack case comprising the cross beam of FIG. 7.
FIG. 10 is an enlarged view of a configuration in which a protruding structure of the busbar frame assembly couples to the fastening groove of FIG. 7.
FIG. 11 is an enlarged view of a structure in which the protruding structure of the busbar frame assembly couples to the fastening groove of FIG. 8.
FIG. 12 is a perspective view of a battery pack according to one embodiment of the present invention.
FIG. 13 is a cross-sectional view with an incision along the "B-B" line of FIG. 12.
FIG. 14 is a perspective view illustrating one embodiment of a gripper of a loading jig gripping a plurality of cell laminates entering a lower cross beam.
FIG. 15 is a cross-sectional view illustrating the loading jig of FIG. 14 with the gripper of the loading jig entering the lower cross beam.
FIG. 16 is a cross-sectional view illustrating the leaving process of the loading jig after the plurality of cell laminates have been seated.
FIG. 17 is a cross-sectional view showing the upper cross beam fastened after the loading jig has left.

### [Best Mode]

The present invention may have various modifications and various embodiments, and thus specific embodiments thereof will be described in detail below.

However, it should be understood that the present invention is not limited to the specific embodiments, and includes all modifications, equivalents, or alternatives within the spirit and technical scope of the present invention.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present invention relates to a pack case, in one example, comprising a base plate, a side plate coupled along a periphery of the base plate to form a receiving space therein, a lower cross beam coupled to the base plate to transversely divide the receiving space inside the base plate, and an upper cross beam coupled to the lower cross beam, wherein the lower cross beam and the upper cross beam are each provided with fastening grooves to regulate the installation position of the cell laminate.

The pack case of the present invention, wherein the upper cross beam is upwardly coupled to the lower cross beam to form a single cross beam.

Thus, the pack case of the present invention has a two-layer structure, with a lower cross beam coupling to the base plate and an upper cross beam coupling upwardly to the lower cross beam. By having the cross beams in a double-layered configuration, welding of the lower cross beam to the base plate is facilitated by improved accessibility of the welding tool tip, and the operation of the loading jig is improved by allowing a plurality of cell laminates to be placed in the pack case before the upper cross beam is assembled.

Further, by organizing the cross beams in a two-layer structure, the upper cross beam, which does not involve welding to the base plate, can be constructed from lightweight different materials, for example engineering plastics, thereby contributing to the lightweight of the battery pack.

In particular, the pack case of the present invention is provided with fastening grooves for regulating the installation position of the cell laminates in each of the lower and upper cross beams, which enables regulating the position of the cell laminates even in a cell-to-pack structure without a separate module housing, thereby improving the productivity and safety of the battery pack.

### [Mode for Invention]

Hereinafter, specific embodiments of a secondary battery of the present invention will be described in detail with reference to the accompanying drawings. For reference, the directions of front, back, up, down, left, and right used in the following description to designate relative positions are for the purpose of understanding the invention and refer to the directions shown in the drawings unless otherwise specified.

### [first embodiment]

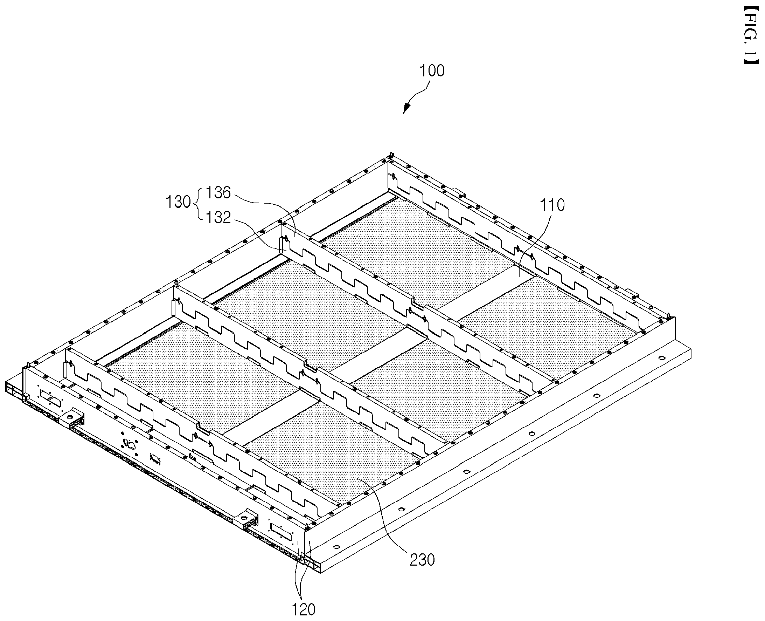

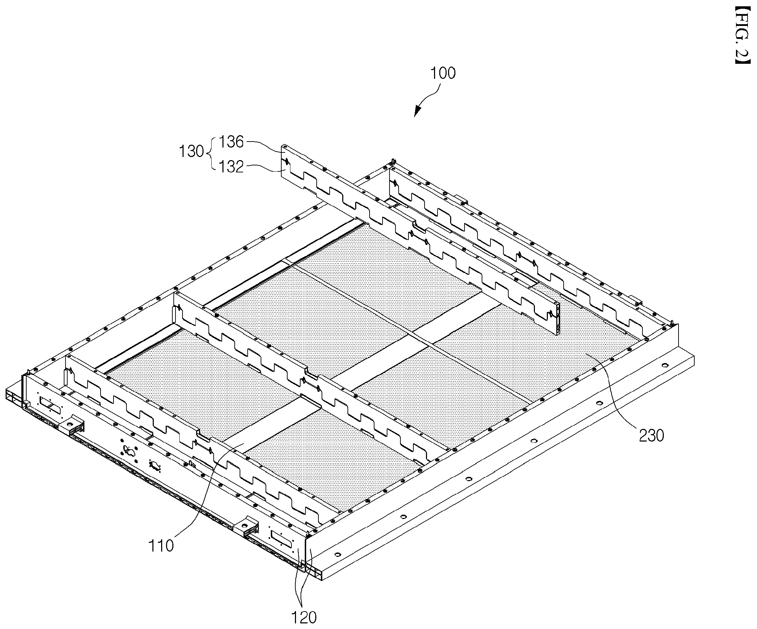

FIG. 1 is a perspective view of the pack case 100 according to one embodiment of the present invention, and FIG. 2 is a perspective view showing the upper cross beam 136 detached from the pack case 100 of FIG. 1. With reference to FIGS. 1 and 2, the overall configuration of the pack case 100 according to an embodiment of the present invention will be described.

The present invention relates to a pack case (100) that accommodates a plurality of cell laminates (210) equally divided. A cell laminate 210 is a single completed battery cell that is capable of being charged and discharged as a secondary battery, and is used herein in an encompassing sense regardless of whether it is a pouch battery, prismatic battery, or the like. Furthermore, while it is not excluded that a plurality of cell laminates 210 may comprise a battery module housed in a single housing and mounted in the pack case 100, the plurality of cell laminates 210 are illustrated in the drawings as a simple aggregation of pouch-type batteries, particularly considering that the pack case 100 of the present invention is suitable for a cell-to-pack structure that does not utilize various module components such as module housings, etc.

The illustrated pack case 100 includes a base plate 110 and side plates 120 coupled along a periphery of the base plate 110 to form a receiving space therein. Further, the base plate 110 comprises a cross beam 130 coupled to the base plate 110 in a transverse direction, with reference to the drawings, as a separation wall member to divide the receiving space within the base plate 110. In the illustrated embodiment, the cross beam 130 of the pack case 100 has a length corresponding to the transverse width of the base plate 110, such that both ends of the cross beam 130 are in contact with or adjacent to the side plates 120.

Referring to FIG. 2, the cross beam 130 comprises two cross beams: a lower cross beam 132 that couples directly to the base plate 110 to transversely divide the receiving space inside the base plate 110, and an upper cross beam 136 that couples to the lower cross beam 132. The upper cross beam 136 is bi-layer in that the lower cross beam 132 and the upper cross beam 136 are upwardly coupled with respect to the lower cross beam 132, i.e., they are aligned and coupled such that the upper cross beam 136 is overlapping the top of the lower cross beam 132, thereby forming a single cross beam 130.

As such, by having a single cross beam 130 divided into lower and upper cross beams 132, 136, the pack case 100 of the present invention has many advantages. For example, since only the lower cross beam 132 needs to be joined to the base plate 110, the reduced height of the cross beam 130 facilitates welding operations on the lower cross beam 132 by improving accessibility of the welding tool tip. Further, the plurality of cell laminates 210 can be mounted in the pack case 100 before the upper cross beam 136 is assembled, which reduces the problem of interference with the cross beam 130, thereby improving the workability of the loading jig 300 for handling the plurality of cell laminates 210 at once.

In addition, by constructing the cross beam 130 as a bi-layer structure, it is possible to contribute to the lightweight of the battery pack 200 by constructing the upper cross beam 136, which does not involve welding to the base plate 110, from a lightweight different material, for example, a metal material such as stainless steel that can be welded to the lower cross beam 132 while the upper cross beam 136 is constructed from a lighter weight engineering plastic or the like.

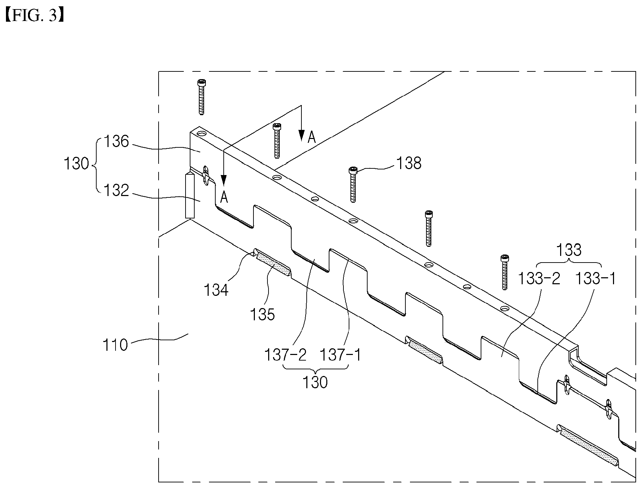

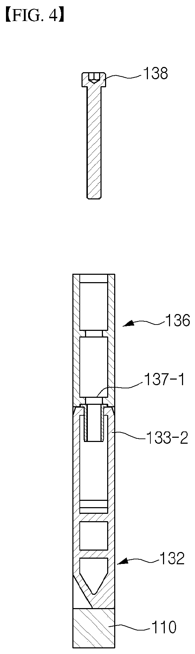

FIG. 3 is a drawing illustrating one embodiment of the coupling structure of the lower and upper cross beams 132, 136, and FIG. 4 is a cross-sectional view cut along the line "A-A" in FIG. 3. According to the embodiment shown, the lower cross beam 132 has a first uneven structure 133 with repeated concave portions 133-1 and projecting portions 133-2 in the upward engagement direction of the upper cross beam 136, and the upper cross beam 136 correspondingly has a second uneven structure 137 in a form complementary to the first uneven structure 133.

Here, when the first uneven structure 133 and the second uneven structure 137 have a complementary shape, it is meant that the concave portion 133-1 of the first uneven structure 133 and the projecting portion 137-2 of the second uneven structure 137, and the projecting portion 133-2 of the first uneven structure 133 and the concave portion 137-1 of the second uneven structure 137, form a kind of overlapping structure facing each other. By the complementary uneven structures 133, 137, a single coupling position of the upper cross beam 136 with respect to the lower cross beam 132 is determined, thereby ensuring accurate alignment of the lower and upper cross beams 132, 136, and thereby facilitating the operation of completing the fastening with the bolts 138 in the prefabricated state of the lower and upper cross beams 132, 136. In addition, as will be described later, the first uneven structure 133 of the lower cross beam 132 is also advantageously utilized to avoid interference with the loading jig 300.

As described above, the lower cross beam 132 may be coupled to the base plate 110 by welding, and the upper cross beam 136 may be coupled to the lower cross beam 132 by bolts 138, and by such a separate bilayer coupling structure, it is possible to make the upper cross beam 136 of a lightweight different material. Referring to FIG. 3, it is advantageous to have a short access path from the upper cross beam 136 to the lower cross beam 132, given the effective threading depth of the bolt 138, so that the bolt 138 fastening occurs in the region where the concave portion 137-1 of the second uneven structure 137 binds to the convex portion of the first uneven structure 133.

Then, referring to FIG. 4, the lower and upper cross beams 132, 136 are essentially hollow and have a ribbed structure connecting the two side walls for rigidity reinforcement. The hollow structure of the lower and upper cross beams 132, 136 allows for lightweighting, and is also advantageous for retarding heat transfer due to thermal runaway by inhibiting heat generated by any of the cell laminates 210 within the pack case 100 from moving, in the form of conduction, to the other cell laminates 210 spaced between the cross beams 130.

### [Second embodiment]

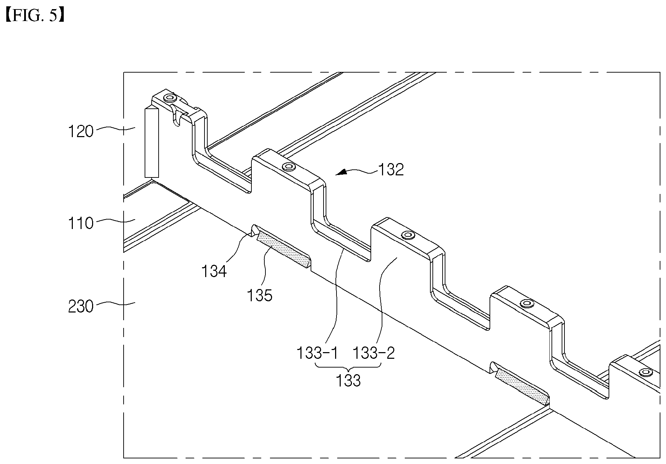

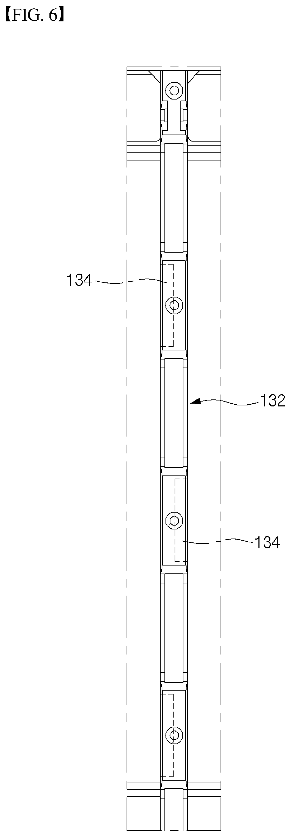

FIG. 5 is a perspective view illustrating the welding structure of the lower cross beam 132 to the base plate 110, and FIG. 6 is a plan view illustrating the welding points of the lower cross beam 132 to the base plate 110.

The cross beam 130 is an important member of the pack case 100 that strengthens the transverse rigidity of the pack case 100 and is welded or bolted to the base plate 110. Welding is often used due to its strength, productivity, and light weight, but in this case, the welding bead 135 that forms on the welding surface of the cross beam 130 and the base plate 110 causes problems with the safety and capacity of the battery pack 200.

**In** other words, a plurality of cell laminates 210 are mounted inside the cross beam 130, especially in a module housing-free or simplified cell-to-pack structure, the cell laminates 210 interfere with the welding bead 135, and in an environment subject to long-term vibration or shock, the cell laminates 210 that interfere with the welding bead 135 are susceptible to damage or breakage, which can cause serious safety issues such as fire. **In** addition, a design that avoids interference with the welding bead 135 creates dead space, which reduces the energy density of the battery pack 200.

The welding structure of the lower cross beam 132 of FIGS. 5 and 6 may solve this problem of welding beads 135. Referring to the drawings, the lower cross beam 132 has at least one concave welding groove 134 at a boundary with the base plate 110. The lower cross beam 132 is welded against the base plate 110 via the welding grooves 134, thereby forming a welding bead 135 in the concave space within the welding grooves 134, wherein the welding bead 135 formed within the welding grooves 134 does not protrude outside of the lower cross beam 132. Thus, interference of the cell laminate 210 by the welding bead 135 and/or generation of dead space by the avoidance design can be prevented.

The size of the welding groove 134 may be designed in consideration of the size of the welding tool tip and the size of the welding bead 135 depending on the welding method. For example, wire laser welding has a small tip size and the size of the welding bead 135 is on the order of 2 to 3 millimeters, so the size of the welding groove 134 can be correspondingly made to be on the order of a few millimeters in height and depth.

**In** one embodiment of the present invention, the welding grooves 134 may be provided on both sides of the lower cross beam 132. **In** this case, as shown in FIG. 6, each of the welding grooves 134 provided on both sides of the lower cross beam 132 may be at least partially non-overlapping along the direction in which they face each other, i.e., dispersed and disposed crossed apart from each other. By evenly distributing the welding grooves 134 on both sides of the lower cross beam 132, a stable welding strength can be achieved while reducing the risk of deformation due to welding heat.

### [Third embodiment]

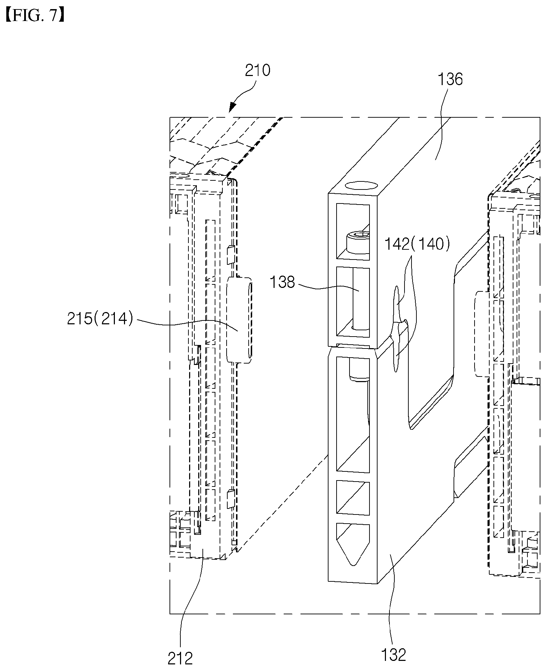

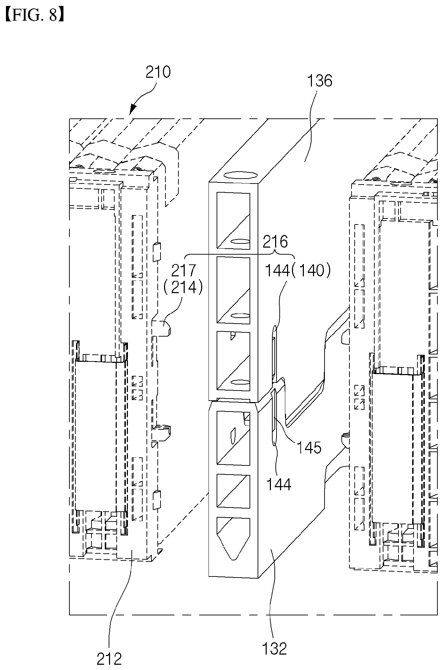

FIGS. 7 and 8 illustrate a pack case 100 according to a third embodiment of the present invention. The third embodiment of FIGS. 7 and 8 is characterized in that the lower cross beam 132 and the upper cross beam 136 are each provided with fastening grooves 140 that regulate the installation position of the cell laminates 210. For example, when the plurality of cell laminates 210 are stored in the pack case 100 as a cell-to-pack structure without separate module housings, the fastening grooves 140 in the cross beam 130 can be utilized to rigidly regulate the installation position of the cell laminates. The plurality of cell laminates 210 with regulated positions are installed in precise locations and are less likely to shift in position during use of the battery pack 200, thereby improving the stability of the battery pack 200.

FIG. 7 shows an embodiment of the fastening groove 140, wherein the fastening groove 140 is formed in the form of an open groove 142 with an opening in the coupling surface of the lower cross beam 132 and the upper cross beam 136. In other words, the fastening groove 140 in FIG. 7 is formed in the form of a half-and-half longitudinal groove in the lower cross beam 132 and the upper cross beam 136, with one side of each longitudinal groove, i.e., the coupling surface of the lower and upper cross beams 132, 136, forming an open opening.

FIG. 8 shows another embodiment of the fastening grooves 140, wherein the fastening grooves 140 are formed in the form of holes 144 separated from each other by the coupling surfaces of the lower cross beam 132 and the upper cross beam 136. In other words, unlike the embodiment of FIG. 7, the pair of fastening grooves 140 do not connect as one, even when the lower and upper cross beams 132, 136 are coupled. The shape of the hole 144 is illustrated in FIG. 8 as a semicircular hole, but is not limited thereto, and various other shapes not shown, such as a circular hole or a square hole, etc. are possible.

Further, the fastening groove 140 of the separated structure of FIG. 8 may include an induction groove 145 extending from the coupling surface of the lower cross beam 132 and the upper cross beam 136 to a hole 144. The induction groove 145 is intended to facilitate gliding of the protruding structure 214 that is engaged in the fastening groove 140, as will be described further below.

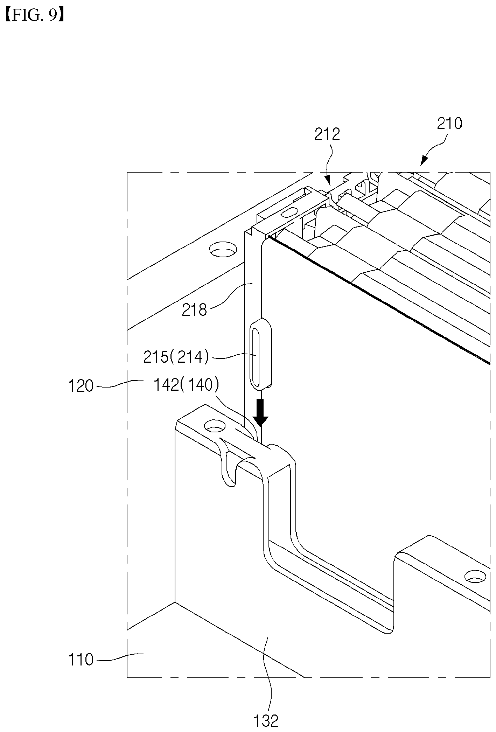

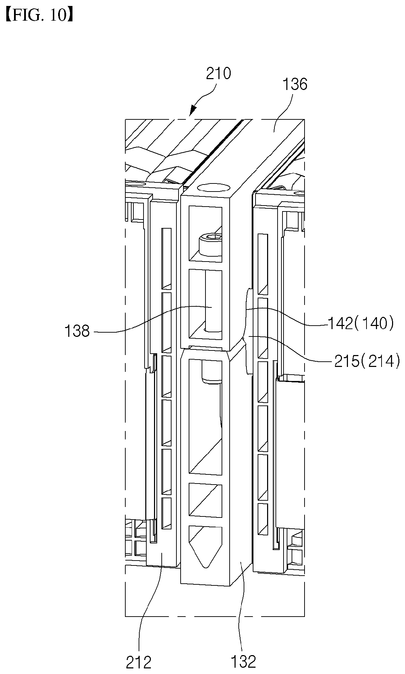

FIGS. 9 and 10 are drawings to illustrate a configuration in which the installation position of the plurality of cell laminates 210 is regulated by the fastening grooves 140 of FIG. 7. FIG. 9 illustrates a configuration in which the plurality of cell laminates 210 are mounted on the pack case 100 in a third embodiment. The cell laminate 210 shown includes a busbar frame assembly 212 that couples to the cell laminate 210 at two ends (transverse ends in the drawing) from which leads protrude, and the busbar frame assembly 212 has a protruding structure 214 that engages in respective fastening grooves 140 of the lower cross beam 132 and the upper cross beam 136. As the protruding structures 214 corresponding to the fastening grooves 140 in FIG. 7, the protruding structures 214 provided in the busbar frame assembly 212 form a fin structure 215 corresponding to a shape in which the open grooves 142 of the lower and upper cross beams 132, 136 are connected as one.

FIG. 10 illustrates a busbar frame assembly 212 coupled to a plurality of cell laminates 210 with respect to the fastening grooves 140 of FIG. 7. For a clear understanding of the third embodiment, the plurality of cell laminates 210 are not shown in FIG. 10, and adjacent cell laminates 210 on either side that share a single cross beam 130 are regulated in position by the same fastening groove 140.

For mounting of the cell laminate 210, the cross beam 130 is installed in the pack case 100 with only the lower cross beam 132 installed, and the openings of the open groove 142, which are the fastening grooves 140 of the lower cross beam 132, are open upward. Accordingly, when the plurality of cell laminate 210 is inserted between the lower cross beams 132 from top to bottom, approximately half of the fin structures 215 of the busbar frame assembly 212 fit into the open grooves142, and fastening between these fin structures 215 and the open grooves 142 occurs at both ends of the plurality of cell laminate 210, thereby aligning the installation position of the plurality of cell laminate 210.

In addition, due to the coupling of the upper cross beam 136 with respect to the lower cross beam 132, the remaining portion of the fin structure 215 fits into the open grooves 142 of the upper cross beam 136, thereby constraining the entire fin structure 215 of the busbar frame assembly 212 within the open grooves 142, which are connected as one by the coupling of the lower and upper cross beams 132, 136. Thus, by the coupling of the lower and upper cross beams 132, 136, the position of the plurality of cell laminates 210 is rigidly regulated. In particular, even when there are no separation wall members longitudinally traversing the receiving space, and thus no means of restricting the positional relationship between longitudinally facing cell laminates 210, as in the exemplary pack case 100 of FIG. 9, it is possible for the pack case 100 of the third embodiment to precisely regulate the mounting position of all cell laminates 210 by the fastening grooves 140 of the cross beams 130 and the protruding structures 214 of the cell laminates 210.

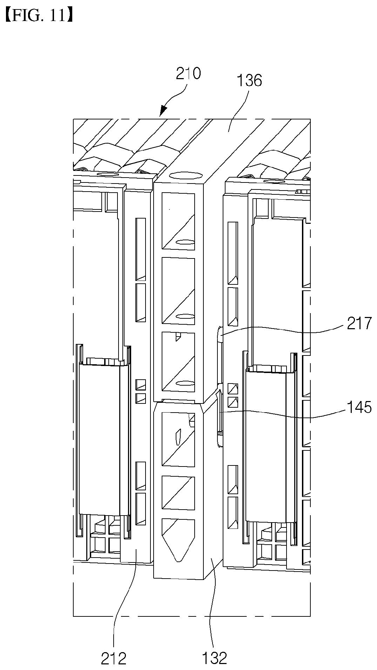

FIG. 11 illustrates the coupling of the busbar frame assembly 212 to the fastening groove 140 of FIG. 8. Essentially, the embodiment of FIG. 8 is the same in that the position of the plurality of cell laminates 210 is regulated by the coupling of the lower and upper cross beams 132, 136, with the difference being the fastening of the protruding structure 214 to the fastening groove 140. As shown in FIG. 8, the fastening grooves 140 are formed in the form of holes 144 separated from each other by the coupling surfaces of the lower cross beam 132 and the upper cross beam 136, and correspondingly, the protruding structures 214 of the busbar frame assembly 212 comprise snap-fit joints 216 comprising cantilever lugs 217 that engage the holes 144 of the lower and upper cross beams 132, 136.

Although the fastening groove 140 is configured in the form of a separate hole 144 without an incision, the cantilever lugs 217 of the protruding structure 214 comprising the snap-fit joint 216 can be resiliently bent to allow the projecting portion of the cantilever ends to enter the hole 144 and be fastened. To enable the cantilever lugs 217 to enter the hole 144 accurately and without damage, the fastening groove 140 may comprise an induction groove 145 extending from the coupling surface of the lower and upper cross beams 132, 136, respectively, to the hole 144, whereby the cantilever lugs 217 of the snap-fit joint 216 may glide over the surface of the induction groove 145 and gently fasten into the hole 144.

Meanwhile, in an installation arrangement in which the plurality of cell laminates 210 are mounted between the parallel cross beams 130, the protruding structures 214 of the plurality of cell laminates 210 may be preferably disposed on either side of the busbar frame assembly 212 facing the respective fastening grooves 140 of the lower and upper cross beams 132, 136. Further, the busbar frame assembly 212 may include an insulating cover 218 coupled to a front surface thereof. The insulating cover 218 is a covering member for electrically and physically protecting the front side of the busbar frame assembly 212 that faces the side plate 120, or other cell laminate 210. The insulating cover 218 may also be configured to be easily attached to the busbar frame assembly 212 by a snap-fit structure, and the insulating cover 218 is designed to not block or obscure the protruding structures 214 disposed on the sides of the busbar frame assembly 212 (refer to FIG. 9).

### [Fourth embodiment]

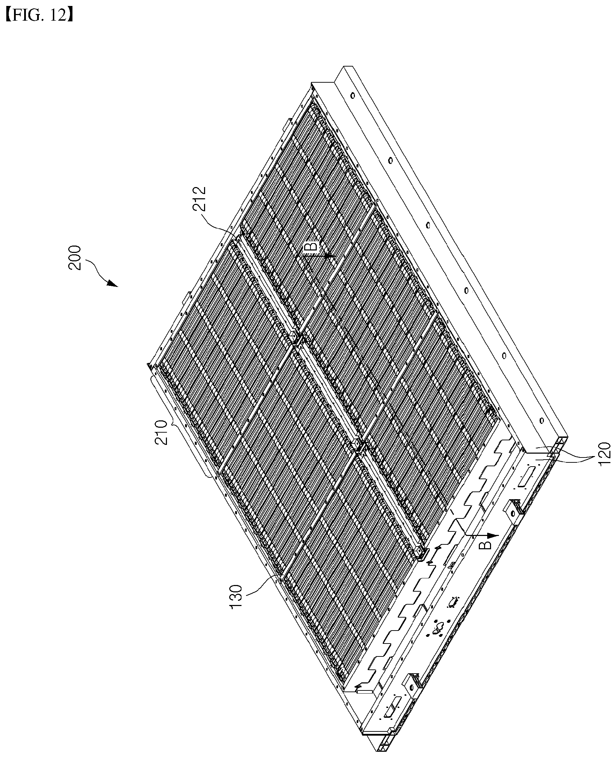

FIG. 12 is a perspective view of a battery pack 200 according to an embodiment of the present invention. With respect to the pack case 100 of the invention described in the first to third embodiments, the battery pack 200 is completed by mounting a plurality of cell laminates 210 each in a plurality of receiving spaces divided by cross beams 130. For reference, the embodiment shown is a battery pack 200 of cell-to-pack construction with a plurality of cell laminates 210 assembled between a busbar frame assembly 212 for electrical connections without a separate module housing, and leads closing the top surface are omitted to show the internal structure.

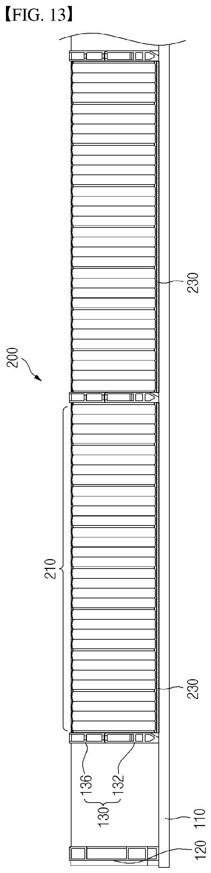

FIG. 13 is a cross-sectional view cut along the "B-B" line of FIG. 12, showing an insulating sheet or compression pad 220 interposed between the lower and upper cross beams 132, 136 and the contact surfaces of the cell laminate 210. The insulating sheet and the compression pad are referred to for convenience as the insulating sheet for a thin member and the compression pad for a thicker member with a relatively high elasticity, and both are protective members for reinforcing electrical insulation and layer rigidity and abrasion resistance of the cell laminate 210, and serve to protect the cell laminate 210 against the cross beam 130.

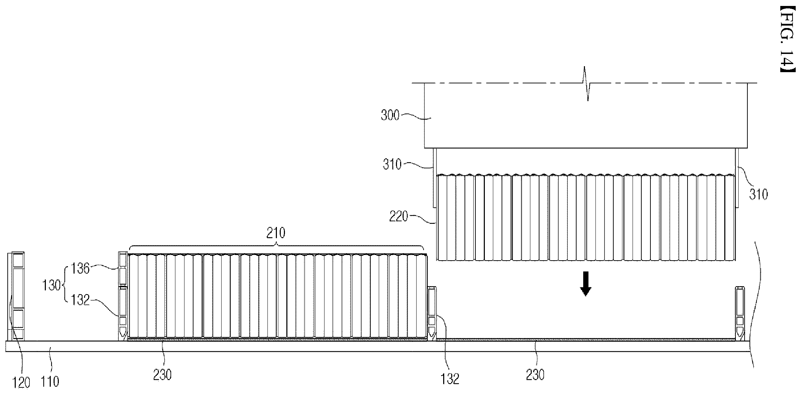

Meanwhile, FIGS. 14 to 17 illustrate a series of steps for manufacturing a battery pack 200 using the pack case 100 of the present invention described above in first to third embodiments. The method of manufacturing the battery pack 200 begins with the first step of preparing the pack case 100 of the present invention, namely, a pack case 100 comprising a base plate 110, side plates 120 coupled along the perimeter of the base plate 110 to form a receiving space therein, and a lower cross beam 132 coupled to the base plate 110 to divide the receiving space inside the base plate 110.

In particular, in a first step, only the lower cross beam 132 of the entire cross beam 130 is prepared in the pack case 100, and in this state, the loading of the cell laminate 210 takes place. In a second step, the plurality of cell laminates 210 are loaded into the receiving space divided by the lower cross beam 132, and in particular, for productivity, a loading jig 300 can be used to handle a plurality of cell laminates 210 at once.

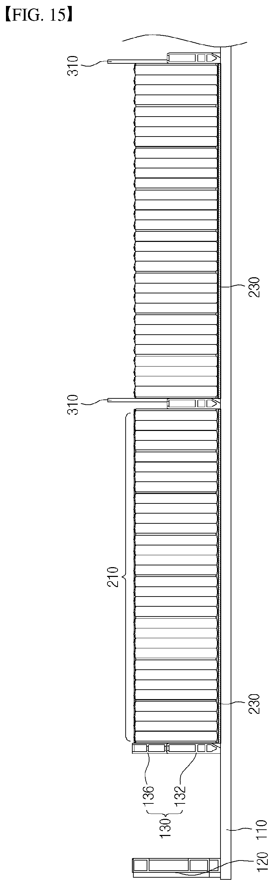

FIG. 14 is a perspective view illustrating an embodiment in which the gripper 310 of the loading jig 300 gripping the plurality of cell laminates 210 enters the lower cross beam 132, and FIG. 15 is a cross-sectional view illustrating the loading jig 300 of FIG. 14 with the gripper 310 entering the lower cross beam 132. To facilitate the operation of the loading jig 300, it is preferred that the pack case 100 prepared in the first step comprises a first uneven structure 133 in which the lower cross beam 132 has repeated concave portions 133-1 and projecting portions 133-2 in the direction of coupling of the lower cross beam 132 and the upper cross beam 136.

As shown in FIGS. 14 and 15, the loading jig 300 has grippers 310 for gripping the plurality of cell laminates 210 integrally. The grippers 310 of the loading jig 300 are provided in pairs that grip two sides of the cell laminate 210 parallel to the lower cross beam 132, and may additionally have grippers 310 that grip other sides of the cell laminate 210.

In particular, the grippers 310 gripping both sides of the cell laminate 210 facing the lower cross beam 132 may include a plurality of feet corresponding to a location (or locations and number) of concave portions 133-1 of the first uneven structure 133 formed in the lower cross beam 132. Accordingly, the gripper 310 of the loading jig 300 enters the concave portion 133-1 of the first uneven structure 133 and grips the plurality of cell laminates 210 on the base plate 110.

Approximately, the depth of the concave portion 133-1 of the first uneven structure 133 is at least half of the total height of the cell laminate 210. Thus, the gripper 310 of the loading jig 300 can have a gripping area of at least half of the total height of the cell laminate 210. In other words, by having the lower cross beam 132 with the first uneven structure 133, the gripper 310 of the loading jig 300 can firmly grip and enter the cell laminate 210 without causing interference with the lower cross beam 132, and can also stably and shock-free place the cell laminate 210 on the base plate 110.

Here, the cross beam 130 of the pack case 100 comprises the fastening grooves 140 described in the third embodiment, and the plurality of cell laminates 210 comprises a protruding structure 214 that fastens to the fastening grooves 140, so that the installation position of the plurality of cell laminates 210 in the pack case 100 is precisely controlled by the loading jig.

For reference, not shown is a thermal resin 230, which serves to improve the heat transfer performance of the battery pack 200 by facilitating conduction heat transfer between the base plate 110 and the cell laminate 210. In particular, in a battery pack 200 with a cell-to-pack structure, when the bottom surface of the cell laminate 210 is open, the thermal resin 230 directly mediates the conduction heat transfer between the base plate 110 and the cell laminate 210 without the need for an intermediate structure such as a module housing, allowing for better heat dissipation. The thermal resin 230 is evenly applied to a suitable thickness on the base plate 110 prior to mounting the cell laminate 210 inside the pack case 100.

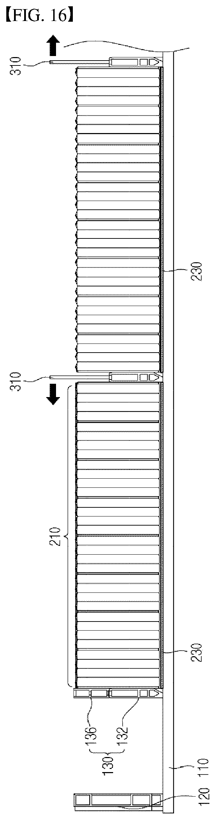

FIG. 16 is a cross-sectional view illustrating the leaving process of the loading jig 300 after the plurality of cell laminates 210 have been seated. Due to the thinner thickness of the grippers 310 compared to the thickness of the lower cross beam 132, once the grippers 310 of the loading jig 300 have gripped the plurality of cell laminates 210 integrally and seated them on the base plate 110, the grippers 310 can retract, release their grip, and continue to leave upwardly on the lower cross beam 132.

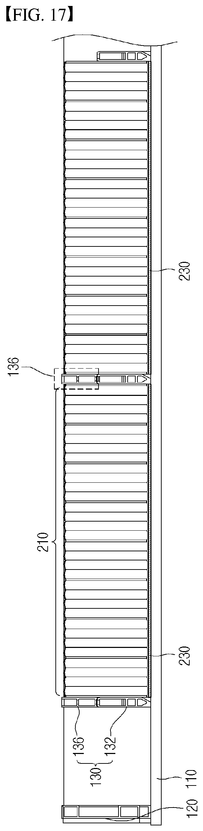

Once the plurality of cell laminates 210 have been mounted integrally into a single receiving space through this series of steps, the third step of coupling the upper cross beam 136 with respect to the lower cross beam 132 on which the plurality of cell laminates 210 are mounted is then performed, as shown in FIG. 17. By engaging the upper cross beam 136 with respect to the lower cross beam 132, sufficient surface pressure can be formed over the entire height of the cell laminate 210. By the surface pressure applied to the cell laminate 210, the swelling phenomenon that occurs as the cell laminate 210 repeats charging and discharging can be effectively suppressed. In addition, the gripping surfaces of the plurality of cell laminates 210 gripped by the loading jig 300 may be attached with insulating sheets or compression pads 220 as described above, which may also assist in suppressing the swelling phenomenon.

The method of the second and third steps above, wherein the second step of seating the plurality of cell laminates (210) in the receiving spaces divided by the lower cross beam (132), the third step of coupling the upper cross beam 136 with respect to the lower cross beam 132 in which the plurality of cell laminates 210 are seated is repeated, and the fourth step of mounting the plurality of cell laminates 210 in all of the receiving spaces is performed, thereby completing the battery pack 200 with all of the cell laminates 210 in the pack case 100 of the present invention.

As above, the present invention has been described in more detail through the drawings and embodiments. However, since the configuration described in the drawings or embodiments described herein is merely one embodiment of the present invention and do not represent the overall technical spirit of the invention, it should be understood that the invention covers various equivalents, modifications, and substitutions at the time of filing of this application.

### [Description of Reference Numerals]

100: pack case
110: base plate
120: side plate
130: cross beam
132: lower cross beam
133: first uneven structure
133-1: concave portion
133-2: projecting portion
134: welding groove
135: welding bead
136: upper cross beam
137: second uneven structure
137-1: concave portion
137-2: projecting portion
138: bolt
140: fastening groove
142: open groove
144: hole
145: induction groove
200: battery pack
210: cell laminate
212: busbar frame assembly
214: protruding structure
215: fin structure
216: snap-fit joint
217: cantilever lug
218: insulating cover
220: insulating sheet or compression pad
230: thermal resin
300: loading jig
310: gripper

## Claims

1. A battery pack (200) comprising:
the pack case (100), comprising:
a base plate (110);
a side plate (120) coupled to the base plate (110) along a periphery of the base plate to define a receiving space therein;
a lower cross beam (132) coupled to the base plate (110) to transversely divide the receiving space inside the base plate (110); and
an upper cross beam coupled (136) to the lower cross beam (132), wherein each of the lower and upper cross beams (132, 136) include a plurality of fastening grooves configured to regulate an installation position of a cell laminate,
the battery pack (200) further comprising a plurality of cell laminates (210) mounted in a divided receiving space of the pack case (100);
**characterised in that**,
the plurality of cell laminates (210) comprises a busbar frame assembly (212) coupled to opposing ends of the plurality of cell laminates (210), wherein leads of the plurality of cell laminates (210) protrude from the opposing ends, and
wherein the busbar frame assembly (212) comprises a protruding structure (214) coupled to the plurality of fastening grooves (140).

2. The battery pack (200) of claim 1, wherein the upper cross beam (136) is upwardly coupled with respect to the lower cross beam (132) to define a single cross beam (130).

3. The battery pack (200) of claim 1, wherein the lower cross beam (132) comprises a first uneven structure (133) having a plurality of concave portions (133-1) and a plurality of projecting portions (133-2) extending along a coupling direction with respect to the upper cross beam (136), and
wherein the upper cross (136) beam comprises a second uneven structure (137) having a shape complementary to the first uneven structure (133).

4. The battery pack (200) of claim 3, wherein the lower cross beam (132) is welded to the base plate (110), and the upper cross beam (136) is coupled to the lower cross beam (132) by a plurality of bolts (138).

5. The battery pack (200)of claim 4, wherein the lower cross beam (132) and the upper cross beam (136) are made of different materials, and
wherein a weight of the upper cross beam (136) is less than a weight of the lower cross beam (132).

6. The battery pack (200)of claim 1, wherein the lower cross beam (132) comprises at least one concave welding groove (134) disposed at a boundary with the base plate (110).

7. The battery pack (200) of claim 6, wherein a plurality of welding grooves (134) are provided on opposing sides of a central axis of the lower cross beam (132), wherein the central axis extends along a length direction of the lower cross beam (132).

8. The battery pack (200)of claim 7, wherein each of the plurality of welding grooves (134) are arranged so at least a portion of each of the plurality of welding grooves (134) is partially non-overlapping with each other along the length direction of the lower cross beam (132).

9. The battery pack (200)of claim 8, wherein the lower cross beam (132) is welded to the base plate (100) via the plurality of welding grooves (134),
wherein a welding bead (135) disposed in each of the plurality of welding grooves (134) is not projecting outside of the lower cross beam (110).

10. The battery pack (200)of claim 1, wherein each of the plurality of fastening grooves (140) define an open groove in a coupling surface of the lower cross beam (132) or in a coupling surface of the upper cross beam (136).

11. The battery pack (200)of claim 1, wherein each of the plurality of fastening grooves (140) define a hole (144) separated from each other by a boundary between a coupling surface of the lower cross beam (132) and a coupling surface of the upper cross beam (136).

12. The battery pack (200)of claim 11, wherein each of the plurality of fastening grooves (140) comprise an induction groove (145) extending from the coupling surfaces of the lower and upper cross beams (132, 136) to the hole (144) of the lower and upper cross beams, respectively.

13. The battery pack (200) of claim 1, wherein each of the plurality of fastening grooves (140) define an opening groove (142) in a coupling surface of the lower cross beam (132) and a coupling surface of the upper cross beam (136), and
wherein the protruding structure (214) is a fin structure (215) coupled to the opening grooves (142) of the lower and upper cross beams (132, 136).

14. The battery pack (200) of claim 1, wherein the plurality of fastening grooves (140) define a plurality of holes (144) separated from each other by a boundary between a coupling surface of the lower cross beam (132) and a coupling surface of the upper cross beam (136), and
wherein the protruding structure (214) is a snap-fit joint (216) comprising a cantilever lug (217) fastened to each of the plurality of holes (144).

15. The battery pack (200) of claim 14, wherein each of the plurality of fastening grooves (140) comprise an induction groove (145) extending from the coupling surfaces of the lower and upper cross beams (132, 136) to each of the plurality of holes (144) of the lower and upper cross beams, respectively, and
wherein a surface of the induction groove (145) is configured to guide cantilever lugs (217) of the protruding structure (214) to be coupled to each of the plurality of holes (144).

16. The battery pack of claim 1, wherein the protruding structures (214) is disposed on either of opposing sides of the busbar frame assembly (212), so as to face the plurality of fastening grooves (140) of the lower cross beam and the upper cross beam (132, 136), respectively.

17. The battery pack (200) of claim 1, wherein the busbar frame assembly (212) comprises an insulating cover (218) that is coupled to a front surface thereof.

18. The battery pack (200) of claim 1, wherein contact surfaces of the plurality of cell laminates (210) and the base plate (110) are interposed with a thermal resin (230).

## Patentansprüche

1. Batteriepack (200), umfassend:
das Packgehäuse (100), umfassend:
eine Grundplatte (110);
eine Seitenplatte (120), die mit der Grundplatte (110) entlang eines Umfangs der Grundplatte gekoppelt ist, um einen Aufnahmeraum darin zu definieren;
einen unteren Querträger (132), der mit der Grundplatte (110) gekoppelt ist, um den Aufnahmeraum innerhalb der Grundplatte (110) quer zu teilen; und
einen oberen Querträger (136), der mit dem unteren Querträger (132) gekoppelt ist, wobei jeder der unteren und oberen Querträger (132, 136) eine Vielzahl von Befestigungsnuten aufweist, die konfiguriert sind, um eine Einbauposition eines Zellenlaminats zu regulieren,
wobei der Batteriepack (200) ferner eine Vielzahl von Zellenlaminaten (210) umfasst, die in einem geteilten Aufnahmeraum des Packgehäuses (100) montiert sind;
**dadurch gekennzeichnet, dass**,
die Vielzahl von Zellenlaminaten (210) eine Sammelschienen-Rahmenanordnung (212) umfasst, die mit gegenüberliegenden Enden der Vielzahl von Zellenlaminaten (210) gekoppelt ist, wobei Leitungen der Vielzahl von Zellenlaminaten (210) von den gegenüberliegenden Enden vorstehen, und
wobei die Sammelschienen-Rahmenanordnung (212) eine vorstehende Struktur (214) umfasst, die mit der Vielzahl von Befestigungsnuten (140) gekoppelt ist.

2. Batteriepack (200) nach Anspruch 1, wobei der obere Querträger (136) nach oben in Bezug auf den unteren Querträger (132) gekoppelt ist, um einen einzigen Querträger (130) zu definieren.

3. Batteriepack (200) nach Anspruch 1, wobei der untere Querträger (132) eine erste unebene Struktur (133) mit einer Vielzahl von konkaven Abschnitten (133-1) und einer Vielzahl von vorstehenden Abschnitten (133-2) umfasst, die sich entlang einer Kopplungsrichtung in Bezug auf den oberen Querträger (136) erstrecken, und
wobei der obere Querträger (136) eine zweite unebene Struktur (137) umfasst, die eine Form aufweist, die komplementär zu der ersten unebenen Struktur (133) ist.

4. Batteriepack (200) nach Anspruch 3, wobei der untere Querträger (132) an die Grundplatte (110) geschweißt ist, und der obere Querträger (136) mit dem unteren Querträger (132) durch eine Vielzahl von Bolzen (138) gekoppelt ist.

5. Batteriepack (200) nach Anspruch 4, wobei der untere Querträger (132) und der obere Querträger (136) aus unterschiedlichen Materialien gefertigt sind, und
wobei ein Gewicht des oberen Querträgers (136) geringer ist als ein Gewicht des unteren Querträgers (132).

6. Batteriepack (200) nach Anspruch 1, wobei der untere Querträger (132) mindestens eine konkave Schweißnut (134) umfasst, die an einer Grenze zu der Grundplatte (110) angeordnet ist.

7. Batteriepack (200) nach Anspruch 6, wobei eine Vielzahl von Schweißnuten (134) auf gegenüberliegenden Seiten einer Mittelachse des unteren Querträgers (132) vorgesehen sind, wobei sich die Mittelachse entlang einer Längsrichtung des unteren Querträgers (132) erstreckt.

8. Batteriepack (200) nach Anspruch 7, wobei jede der Vielzahl von Schweißnuten (134) so angeordnet ist, dass mindestens ein Abschnitt jeder der Vielzahl von Schweißnuten (134) entlang der Längsrichtung des unteren Querträgers (132) teilweise nicht überlappend zueinander ist.

9. Batteriepack (200) nach Anspruch 8, wobei der untere Querträger (132) über die Vielzahl von Schweißnuten (134) an die Grundplatte (100) geschweißt ist,
wobei ein Schweißwulst (135), der in jeder der Vielzahl von Schweißnuten (134) angeordnet ist, nicht außerhalb des unteren Querträgers (110) vorsteht.

10. Batteriepack (200) nach Anspruch 1, wobei jede der Vielzahl von Befestigungsnuten (140) eine offene Nut in einer Kopplungsfläche des unteren Querträgers (132) oder in einer Kopplungsfläche des oberen Querträgers (136) definiert.

11. Batteriepack (200) nach Anspruch 1, wobei jede der Vielzahl von Befestigungsnuten (140) ein Loch (144) definiert, das durch eine Grenze zwischen einer Kopplungsfläche des unteren Querträgers (132) und einer Kopplungsfläche des oberen Querträgers (136) voneinander getrennt ist.

12. Batteriepack (200) nach Anspruch 11, wobei jede der Vielzahl von Befestigungsnuten (140) eine Einführungsnut (145) umfasst, die sich von den Kopplungsflächen der unteren und oberen Querträger (132, 136) jeweils zu dem Loch (144) der unteren und oberen Querträger erstreckt.

13. Batteriepack (200) nach Anspruch 1, wobei jede der Vielzahl von Befestigungsnuten (140) eine Öffnungsnut (142) in einer Kopplungsfläche des unteren Querträgers (132) und einer Kopplungsfläche des oberen Querträgers (136) definiert, und
wobei die vorstehende Struktur (214) eine Rippenstruktur (215) ist, die mit den Öffnungsnuten (142) der unteren und oberen Querträger (132, 136) gekoppelt ist.

14. Batteriepack (200) nach Anspruch 1, wobei die Vielzahl von Befestigungsnuten (140) eine Vielzahl von Löchern (144) definieren, die durch eine Grenze zwischen einer Kopplungsfläche des unteren Querträgers (132) und einer Kopplungsfläche des oberen Querträgers (136) voneinander getrennt sind, und
wobei die vorstehende Struktur (214) eine Schnappverbindung (216) ist, die eine freitragende Nase (217) umfasst, die an jedem der Vielzahl von Löchern (144) befestigt ist.

15. Batteriepack (200) nach Anspruch 14, wobei jede der Vielzahl von Befestigungsnuten (140) eine Einführungsnut (145) umfasst, die sich von den Kopplungsflächen der unteren und oberen Querträger (132, 136)jeweils zu jedem der Vielzahl von Löchern (144) der unteren und oberen Querträger erstreckt, und
wobei eine Oberfläche der Einführungsnut (145) konfiguriert ist, um freitragende Nasen (217) der vorstehenden Struktur (214) zu führen, um mit jedem der Vielzahl von Löchern (144) gekoppelt zu werden.

16. Batteriepack nach Anspruch 1, wobei die vorstehenden Strukturen (214) auf einer von gegenüberliegenden Seiten der Sammelschienen-Rahmenanordnung (212) angeordnet sind, so dass sie der Vielzahl von Befestigungsnuten (140) des unteren Querträgers und des oberen Querträgers (132, 136) jeweils zugewandt sind.

17. Batteriepack (200) nach Anspruch 1, wobei die Sammelschienen-Rahmenanordnung (212) eine isolierende Abdeckung (218) umfasst, die mit einer vorderen Oberfläche davon gekoppelt ist.

18. Batteriepack (200) nach Anspruch 1, wobei Kontaktflächen der Vielzahl von Zellenlaminaten (210) und der Grundplatte (110) mit einem thermischen Harz (230) zwischengefügt sind.

## Revendications

1. Bloc-batterie (200) comprenant :
le boîtier de bloc (100), comprenant :
une plaque de base (110) ;
une plaque latérale (120) couplée à la plaque de base (110) le long d'une périphérie de la plaque de base pour définir un espace de réception à l'intérieur de celle-ci ;
une traverse inférieure (132) couplée à la plaque de base (110) pour diviser transversalement l'espace de réception à l'intérieur de la plaque de base (110) ; et
une traverse supérieure (136) couplée à la traverse inférieure (132), dans lequel chacune des traverses inférieure et supérieure (132, 136) inclut une pluralité de rainures de fixation configurées pour réguler une position d'installation d'un stratifié de cellule,
le bloc-batterie (200) comprenant en outre une pluralité de couches de cellule (210) montés dans un espace de réception divisé du boîtier de bloc (100) ;
**caractérisé en ce que**,
la pluralité de couches de cellule (210) comprend un ensemble de cadre de barre omnibus (212) couplé à des extrémités opposées de la pluralité de couches de cellule (210), dans lequel des conducteurs de la pluralité de couches de cellule (210) font saillie depuis les extrémités opposées, et
l'ensemble de cadre de barre omnibus (212) comprend une structure en saillie (214) couplée à la pluralité de rainures de fixation (140).

2. Bloc-batterie (200) selon la revendication 1, dans lequel la traverse supérieure (136) est couplée vers le haut par rapport à la traverse inférieure (132) pour définir une traverse unique (130).

3. Bloc-batterie (200) selon la revendication 1, dans lequel la traverse inférieure (132) comprend une première structure inégale (133) ayant une pluralité de parties concaves (133-1) et une pluralité de parties en saillie (133-2) s'étendant le long d'une direction de couplage par rapport à la traverse supérieure (136), et
dans lequel la traverse supérieure (136) comprend une seconde structure inégale (137) ayant une forme complémentaire à la première structure inégale (133).

4. Bloc-batterie (200) selon la revendication 3, dans lequel la traverse inférieure (132) est soudée à la plaque de base (110), et la traverse supérieure (136) est couplée à la traverse inférieure (132) par une pluralité de boulons (138).

5. Bloc-batterie (200) selon la revendication 4, dans lequel la traverse inférieure (132) et la traverse supérieure (136) sont faites de matériaux différents, et
dans lequel un poids de la traverse supérieure (136) est inférieur à un poids de la traverse inférieure (132).

6. Bloc-batterie (200) selon la revendication 1, dans lequel la traverse inférieure (132) comprend au moins une rainure de soudage concave (134) disposée à une limite avec la plaque de base (110).

7. Bloc-batterie (200) selon la revendication 6, dans lequel une pluralité de rainures de soudage (134) sont prévues sur des côtés opposés d'un axe central de la traverse inférieure (132), dans lequel l'axe central s'étend le long d'une direction de la longueur de la traverse inférieure (132).

8. Bloc-batterie (200) selon la revendication 7, dans lequel chacune de la pluralité de rainures de soudage (134) est agencée de sorte qu'au moins une partie de chacune de la pluralité de rainures de soudage (134) est partiellement non chevauchant l'une par rapport à l'autre le long de la direction de la longueur de la traverse inférieure (132).

9. Bloc-batterie (200) selon la revendication 8, dans lequel la traverse inférieure (132) est soudée à la plaque de base (100) via la pluralité de rainures de soudage (134),
dans lequel un cordon de soudure (135) disposé dans chacune de la pluralité de rainures de soudage (134) ne fait pas saillie à l'extérieur de la traverse inférieure (110).

10. Bloc-batterie (200) selon la revendication 1, dans lequel chacune de la pluralité de rainures de fixation (140) définit une rainure ouverte dans une surface de couplage de la traverse inférieure (132) ou dans une surface de couplage de la traverse supérieure (136).

11. Bloc-batterie (200) selon la revendication 1, dans lequel chacune de la pluralité de rainures de fixation (140) définit un trou (144) séparé des autres par une limite entre une surface de couplage de la traverse inférieure (132) et une surface de couplage de la traverse supérieure (136).

12. Bloc-batterie (200) selon la revendication 11, dans lequel chacune de la pluralité de rainures de fixation (140) comprend une rainure d'induction (145) s'étendant depuis les surfaces de couplage des traverses inférieure et supérieure (132, 136) jusqu'au trou (144) des traverses inférieure et supérieure, respectivement.

13. Bloc-batterie (200) selon la revendication 1, dans lequel chacune de la pluralité de rainures de fixation (140) définit une rainure d'ouverture (142) dans une surface de couplage de la traverse inférieure (132) et une surface de couplage de la traverse supérieure (136), et
dans lequel la structure en saillie (214) est une structure d'ailette (215) couplée aux rainures d'ouverture (142) des traverses inférieure et supérieure (132, 136).

14. Bloc-batterie (200) selon la revendication 1, dans lequel la pluralité de rainures de fixation (140) définit une pluralité de trous (144) séparés les uns des autres par une limite entre une surface de couplage de la traverse inférieure (132) et une surface de couplage de la traverse supérieure (136), et
dans lequel la structure en saillie (214) est un joint à encliquetage (216) comprenant une patte en porte-à-faux (217) fixée à chacun de la pluralité de trous (144).

15. Bloc-batterie (200) selon la revendication 14, dans lequel chacune de la pluralité de rainures de fixation (140) comprend une rainure d'induction (145) s'étendant depuis les surfaces de couplage des traverses inférieure et supérieure (132, 136) jusqu'à chacun de la pluralité de trous (144) des traverses inférieure et supérieure, respectivement, et
dans lequel une surface de la rainure d'induction (145) est configurée pour guider des pattes en porte-à-faux (217) de la structure en saillie (214) pour qu'elles soient couplées à chacun de la pluralité de trous (144).

16. Bloc-batterie selon la revendication 1, dans lequel les structures en saillie (214) sont disposées sur l'un ou l'autre des côtés opposés de l'ensemble de cadre de barre omnibus (212), de manière à faire face à la pluralité de rainures de fixation (140) de la traverse inférieure et de la traverse supérieure (132, 136), respectivement.

17. Bloc-batterie (200) selon la revendication 1, dans lequel l'ensemble de cadre de barre omnibus (212) comprend un couvercle isolant (218) qui est couplé à une surface avant de celui-ci.

18. Bloc-batterie (200) selon la revendication 1, dans lequel des surfaces de contact de la pluralité de couches de cellule (210) et de la plaque de base (110) sont interposées avec une résine thermique (230).
